# EUROPÄISCHE PATENTSCHRIFT

(11) **EP 4 015 060 B1**
(45) Veröffentlichungstag und Bekanntmachung des Hinweises auf die Patenterteilung: **03.01.2024**
(21) Anmeldenummer: 20214402.8
(22) Anmeldetag: 16.12.2020
(51) Int. Cl.: B01D 25/12, B01D 25/32, B01D 25/164, B01D 25/38

(54) **VORRICHTUNGEN UND VERFAHREN ZUM REINIGEN VON FILTERPLATTEN EINES FILTERPAKETS, FILTERANLAGEN UND VERFAHREN ZUM AUFRÜSTEN VON FILTERANLAGEN**
DEVICE AND METHOD FOR CLEANING FILTER PLATES OF A FILTER PACK, FILTER SYSTEMS AND METHOD FOR UPGRADING FILTER SYSTEMS
DISPOSITIFS ET PROCÉDÉ DE NETTOYAGE DES PLAQUES FILTRANTES D'UN PAQUET FILTRANT, INSTALLATIONS DE FILTRATION ET PROCÉDÉ DE MISE À NIVEAU DES INSTALLATION DE FILTRATION

(43) Veröffentlichungstag der Anmeldung: 22.06.2022
(73) Patentinhaber: Filtrox AG, 9000 St. Gallen (CH)
(72) Erfinder: Racic, Andrijana, 8589 Sitterdorf (CH); Göhringer, Jonas, 8280 Kreuzlingen (CH); Breitenmoser, Stefan, 9308 Lömmenschwil (CH)
(74) Vertreter: Hepp Wenger Ryffel AG

(56) Entgegenhaltungen:
- WO-A1-2016/179408
- WO-A1-2020/208534
- CN-A- 110 393 959
- DE-A1- 2 813 236

## Beschreibung

Die vorliegende Erfindung befasst sich mit Reinigungsvorrichtungen zum Reinigen von Filterplatten von Filterpaketen. Des Weiteren betrifft die Erfindung Filteranlagen mit solchen Reinigungsvorrichtungen, Verfahren zum Reinigen von Filterplatten sowie Verfahren zum Aufrüsten von Filteranlagen.

Unter anderem in der Pharmazie, der Biotechnologie, der Chemie, der Kosmetikindustrie und der Lebensmitteltechnologie werden Filterpakete mit mehreren Filterplatten eingesetzt, um Flüssigkeiten zu filtrieren. In Filterpaketen sind mehrere solcher Filterplatten entlang einer Längsrichtung aufgereiht, die parallel zu den Filterflächen verläuft.

Die Filterpakete enthalten typischerweise und in an sich bekannter Weise mehrere Arten von Filterplatten, nämlich eine Anfangszelle, eine Endzelle und mindestens ein dazwischen angeordnetes Trubelement. Insbesondere enthalten die Filterpakete zwischen der Anfangszelle und der Endzelle mehrere Klarelemente und mehrere Trubelemente, die jeweils zwischen zwei Klarelementen angeordnet sind. Die Klarelemente enthalten eine Filterstützfläche und einen diese haltenden Rahmen. Die Trubelemente enthalten einen Rahmen und optional eine davon gehaltene Filterstützfläche. Die Filterstützflächen stützen im Betrieb der Filteranlage ein Filtermedium, welches die eigentliche Filtration bewirkt, ab.

Die Filterplatten verfügen üblicherweise an beiden Seiten über stirnseitige Dichtelemente, die beim Zusammenbringen benachbarter Filterplatten für eine Dichtung sorgen.

Die Filterplatten müssen regelmässig gereinigt werden, um sie von unerwünschten Rückständen zu befreien, und zwar teilweise bis zu ein- oder sogar mehrmals täglich. Hierzu müssen die Filterplatten zunächst voneinander separiert werden, um die Zwischenräume freizulegen. Anschliessend werden die Filterplatten mit einer Reinigungsflüssigkeit besprüht, beispielsweise mit Wasser.

Aufgrund der oftmals hohen Ansprüche an die Hygiene - insbesondere in den oben genannten Anwendungsgebieten - werden solche Filterpakete häufig in Reinräumen verwendet. Hierdurch ergeben sich jedoch mehrere Schwierigkeiten:
Das Dokument CH-602 158 A5 offenbart eine Reinigung von Filterplatten in einer Filterpresse. Allerdings können beim Reinigen Spritzwasser und Produktreste ungehindert in die Umgebung austreten, was in Reinräumen absolut inakzeptabel ist. Um diesem Problem entgegenwirken zu können, könnten die Filterplatten zwar manuell gereinigt werden, was jedoch zeit- und kostenintensiv ist.

Die EP-0 499 859 A1 offenbart eine Reinigung von Filterplatten einer Filterpresse unter erhöhten Reinheitsbedingungen. Zu diesem Zweck werden die Filterplatten separiert und nacheinander in eine von zwei Waschkammern überführt, welche ausserhalb der Filterpresse angeordnet sind. Die für die Überführung verwendete Transporteinrichtung ist jedoch baulich aufwendig, erfordert viel Platz und lässt nur eine langsame Reinigung der Filterplatten zu. Zudem sorgen lange Transportwege für eine grosse Luftverwirbelung, was in Reinräumen unbedingt zu vermeiden ist.

Das Dokument CN 110393959 A offenbart eine weitere Reinigungsvorrichtung für eine Filterpresse. Diese Vorrichtung enthält zwei Gehäuseteile, zwischen denen eine Filterplatte aufgenommen werden kann. An der Innenseite eines Gehäuseteils sind Düsen angeordnet, aus denen eine Reinigungsflüssigkeit auf die Filterplatte gesprüht werden kann.

Es ist eine Aufgabe der vorliegenden Erfindung, die bekannten Vorrichtungen und Verfahren dahingehend weiterzuentwickeln, dass die erwähnten Nachteile überwunden werden können. Insbesondere sollen Verunreinigungen der Umgebung möglichst effektiv verhindert werden, so dass die Reinigung der Filterplatten auch in Reinräumen durchgeführt werden kann. Zudem sollen die Filterplatten möglichst einfach, Platz sparend und schnell gereinigt werden können.

In einem ersten Aspekt der Erfindung werden diese und weitere Aufgaben gelöst durch eine Reinigungsvorrichtung zum Reinigen von Filterplatten eines Filterpakets, das in einer Filteranlage aufgenommen ist. Das Filterpaket weist mehrere entlang einer Längsrichtung angeordnete Filterplatten auf, mit denen Flüssigkeiten filtriert werden können, insbesondere in Reinräumen. Die Filterplatten können jeweils eine Filterstützfläche aufweisen, die von einem umlaufenden Rahmen gehalten ist.

Die Reinigungsvorrichtung enthält eine Reinigungskabine mit mindestens zwei Kabinenelementen, welche zwischen einer Offenposition und einer Schliessposition relativ zueinander bewegbar sind, und zwar derart, dass
- in der Offenposition die Reinigungskabine in der Längsrichtung relativ zu einer Filterplatte bewegbar ist und
- in der Schliessposition die Kabinenelemente einen Reinigungsraum umschliessen, in dem zumindest ein Reinigungsabschnitt der Filterplatte aufgenommen ist.

In der Schliessposition kann insbesondere zumindest eine Filterstützfläche der Filterplatte im Reinigungsraum aufgenommen sein. Insbesondere kann in der Schliessposition die gesamte Filterplatte im Reinigungsraum aufgenommen sein.

Des Weiteren verfügt die Reinigungsvorrichtung bevorzugt über mindestens eine Reinigungseinrichtung, insbesondere eine Sprüheinrichtung, mit mindestens einer im Reinigungsraum angeordneten Reinigungseinheit, mittels deren zumindest der Reinigungsabschnitt der Filterplatte in der Schliessposition der Kabinenelemente reinigbar und insbesondere mit einer Reinigungsflüssigkeit besprühbar ist, insbesondere mit Wasser. Insbesondere kann eine Filterstützfläche der Filterplatte oder die gesamte Filterplatte mittels der Reinigungseinheit reinigbar sein.

Die Kabinenelemente können beide relativ zu einem Grundgestell der Filteranlage bewegbar sein. Im Rahmen der vorliegenden Erfindung werden die mindestens zwei Kabinenelemente aber auch dann als relativ zueinander bewegbar angesehen, wenn ein Kabinenelement unbeweglich ist und mindestens eines der weiteren Kabinenelemente relativ bewegbar ist.

Des Weiteren umschliessen die Kabinenelemente im Sinne der Erfindung insbesondere dann einen Reinigungsraum, wenn die Reinigungsflüssigkeit beim oder nach dem Besprühen der Filterplatte und/oder von den Filterplatten entfernte Rückstände kontrolliert aus dem Reinigungsraum abführbar sind - beispielsweise indem die Reinigungsflüssigkeit bzw. die Rückstände an Innenwänden der Kabinenelemente nach unten geleitet wird, wo sie dann kontrolliert abgeführt werden können. Es ist also im Rahmen der vorliegenden Erfindung nicht erforderlich, dass die Kabinenelemente den Reinigungsraum hermetisch umschliessen.

Die erfindungsgemässe Ausbildung erlaubt es, eine Filterplatte in der Längsrichtung zu bewegen, wenn sich die Kabinenelemente in der Offenposition befinden. Anschliessend können die Kabinenelemente in die Schliessposition bewegt werden. In dieser Schliessposition umschliessen die Kabinenelemente den Reinigungsraum, in dem die Reinigungseinrichtung die Filterplatte reinigen kann, insbesondere die Sprüheinrichtung die Filterplatte mit der Reinigungsflüssigkeit besprühen kann. Auf diese Weise können die Reinigungsflüssigkeit und/oder von den Filterplatten entfernte Rückstände kontrolliert abgeführt werden, so dass Verunreinigungen der Umgebung weitgehend verhindert werden können.

Dabei ist die Reinigungsvorrichtung erfindungsgemäss dazu ausgebildet, die Filterplatten zu reinigen, während sie von der Filteranlage aufgenommen sind. Die Filterplatten oder das sie enthaltende Filterpaket müssen also nicht mühevoll aus der Filteranlage entnommen werden, um an anderer Stelle gereinigt zu werden, und müssen nicht anschliessend wieder in die Filteranlage eingesetzt werden.

Vorteilhafterweise ist das Filterpaket beim Betrieb der Vorrichtung so ausgerichtet, dass die Filterplatten vertikal angeordnet sind und sich die Längsrichtung in horizontaler Richtung erstreckt. Dies ermöglicht es, die Filterplatten an ihrem Rahmen beidseitig aufzuhängen, beispielsweise auf Tragestangen.

Erfindungsgemäss sind die Kabinenelemente in einer zur Längsrichtung senkrechten Richtung zwischen der Offenposition und der Schliessposition relativ zueinander bewegbar. Analog zu oben umfasst dies auch Ausführungsformen, in denen nur eines der Kabinenelemente beweglich ist.

Vorteilhafterweise sind die Kabinenelemente in vertikaler Richtung zwischen der Offenposition und der Schliessposition relativ zueinander bewegbar. Auf diese Weise kann die Grundfläche der gesamten Vorrichtung reduziert werden. Zum Einstellen der Schliessposition kann ein oberes Kabinenelement abgesenkt werden und/oder ein unteres Kabinenelement kann angehoben werden. Vorteilhafterweise überlappt das untere Kabinenelement in der Schliessposition das obere Kabinenelement. Zum Einstellen der Offenposition kann die Bewegung der Kabinenelemente in umgekehrter Richtung erfolgen.

Die Kabinenelemente, insbesondere ein oberes und ein unteres Kabinenelement, können in etwa gleiche Dimensionen aufweisen. Je nach den Dimensionen der Filterplatten und dem darunter zur Verfügung stehenden Freiraum kann es jedoch auch sinnvoll oder erforderlich sein, dass das obere Kabinenelement eine grössere Bauhöhe aufweist als das untere Kabinenelement. Beispielsweise kann die Bauhöhe des oberen Kabinenelements mindestens das Doppelte oder sogar bis zum Zehnfachen der Bauhöhe des unteren Kabinenelements betragen.

Insbesondere wenn die Filterpakete sehr lang sind und die oben erwähnten Tragestangen mithilfe von Stützfüssen gestützt werden müssen, kann der Fall eintreten, dass für vertikal bewegbare Kabinenelemente kein ausreichender Bauraum zur Verfügung steht. In diesem Fall können die Kabinenelemente auch in horizontaler Richtung beweglich angeordnet sein. Ebenso ist es denkbar, bei langen Tragestangen zusätzlich einen Stützbalken unterhalb der Tragestangen vorzusehen. Die Tragestangen können auf diesem Stützbalken entlang ihrer Länge einmal oder mehrfach abgestützt werden, ohne dass bis auf den Boden reichende Stützfüsse erforderlich sind, welche die Bewegung der Kabinenelemente behindern könnten.

Die Kabinenelemente können auch durch eine horizontale Bewegung zwischen der Offenposition und der Schliessposition bewegbar sein, beispielsweise parallel zur Längsrichtung oder in einer dazu senkrechten horizontalen Richtung. Des Weiteren können die Kabinenelemente durch eine kombinierte vertikale und horizontale Bewegung zwischen der Offenposition und der Schliessposition bewegbar sein.

Um das Reinigungsverfahren beschleunigen zu können, kann die Reinigungseinrichtung mindestens zwei Reinigungseinheiten aufweisen. Insbesondere kann die Sprüheinrichtung mindestens zwei Sprüheinheiten aufweisen. Eine erste dieser Reinigungseinheiten kann zum Reinigen, insbesondere zum Besprühen, einer ersten Seite der Filterplatte angeordnet sein, und eine zweite Reinigungseinheit kann zum Reinigen, insbesondere zum Besprühen, einer der ersten Seite gegenüberliegenden zweiten Seite der Filterplatte angeordnet sein.

Insbesondere dann, wenn die Sprüheinheit wie unten beschriebene Flachstrahldüsen enthält, ist es von Vorteil, wenn Reinigungseinheit, insbesondere die Sprüheinheit, relativ zur Reinigungskabine beweglich angeordnet ist. Auf diese Weise nämlich kann die gesamte Filterstützfläche der Filterplatte oder sogar die gesamte Filterplatte gereinigt werden, insbesondere indem sie besprüht wird.

Die Reinigungseinheit kann beispielsweise in vertikaler Richtung verschiebbar sein. Allerdings hat es sich als wirkungsvoller herausgestellt, wenn die Reinigungseinheit um eine Rotationsachse rotierbar angeordnet ist, die in der Längsrichtung verläuft, also insbesondere in horizontaler Richtung. Denn auf diese Weise kann insbesondere die Reinigungsflüssigkeit der Sprüheinheit leichter zugeführt werden. Insbesondere kann die Lagerung der Sprüheinheit als Drehdurchführung genutzt werden.

Als vorteilhaft hat es sich auch erwiesen, wenn die Sprüheinrichtung mindestens eine Sprüheinheit mit mindestens einer Flachstrahldüse enthält. Gegenüber anderen Düsenformen (beispielsweise Vollkegeldüsen) lässt sich hiermit eine effektivere Reinigung in kürzerer Zeit bewerkstelligen.

Die Sprüheinheit kann beispielsweise als Sprüharm ausgebildet sein, entlang dessen Längsachse eine oder mehrere Düsen, insbesondere mehrere Flachstrahldüsen, angeordnet sind, aus denen die Reinigungsflüssigkeit abgegeben werden kann.

Eine Flachstrahldüse ist vorteilhaft zum Besprühen der Filterplatte mit einem Sprühwinkel ausgebildet, der im Bereich von 20° bis 140°, bevorzugt im Bereich von 45° bis 135°, weiter bevorzugt im Bereich von 60° bis 120° liegt. Denn bei kleineren Sprühwinkeln würde nur ein kleinerer Teil der Filterstützfläche gereinigt werden. Hingegen würde bei grösseren Sprühwinkeln die Reinigungsflüssigkeit auf eine zu grosse Fläche verteilt, was die Reinigungswirkung herabsetzen würde.

Ist die Sprüheinheit rotierbar angeordnet und verfügt sie über mehrere Flachstrahldüsen, so können die weiter aussen angeordneten Flachstrahldüsen Sprühwinkel aufweisen, die grösser als die weiter innen angeordneten Flachstrahldüsen sind. Auf diese Weise trifft die Reinigungsflüssigkeit in einem mittleren Bereich der Filterplatte, in dem die Filtrierung im Wesentlichen stattfindet, mit einer grösseren Aufprallkraft auf die Filterplatte. Zudem können Ecken von beispielsweise im Wesentlichen rechteckigen Filterplatten zuverlässiger gereinigt werden. Enthalten die Filterplatten stirnseitige umlaufende Dichtelemente, so ist ausserhalb dieser Dichtelemente üblicherweise keine Reinigung erforderlich.

Die Flachstrahldüse kann zum Besprühen der Filterplatte in einer Sprühebene ausgebildet und angeordnet sein, die parallel zur Längsrichtung verläuft und insbesondere die Rotationsachse der Sprüheinheit enthält.

Es ist denkbar und liegt im Rahmen der Erfindung, dass die Sprüheinrichtung, insbesondere die mindestens eine Sprüheinheit, durch einen Rückstoss angetrieben wird, der durch das Sprühen der Reinigungsflüssigkeit entsteht. Allerdings hat es sich als vorteilhaft erwiesen, wenn die Sprüheinrichtung, insbesondere die mindestens eine Sprüheinheit, mittels eines Motors bewegbar ist, beispielsweise eines Schrittmotors. Bevorzugt ist eine Antriebswelle des Motors über eine Zahnradkupplung an die Sprüheinheit gekoppelt. Hierdurch ergibt sich eine kompakte Bauweise. Wie sich zudem gezeigt hat, kann die Bewegung der Sprüheinheit auf diese Weise präzise gesteuert werden.

Sind mehrere Düsen, insbesondere Flachstrahldüsen, vorhanden, so ist es vorteilhaft, wenn sich die Sprühbereiche, in denen die Reinigungsflüssigkeit auf die Filterplatte trifft, überlappen.

Zweckmässigerweise ist die Reinigungseinrichtung, insbesondere die mindestens eine Reinigungseinheit, an einer Innenwand eines der Kabinenelemente angeordnet. Insbesondere ist es zweckmässig, wenn die Sprüheinrichtung, insbesondere die mindestens eine Sprüheinheit, an einer Innenwand eines der Kabinenelemente angeordnet ist. Denn auf diese Weise kann die Reinigungseinheit zusammen mit dem Kabinenelement bewegt werden, ohne dass eine weitere Antriebseinheit erforderlich ist, um die Reinigungseinheit zum Reinigen, insbesondere zum Besprühen, der Filterplatte zu positionieren.

Es sind aber auch andere Formen von Reinigungseinrichtungen ohne Sprüheinheiten, z. B. unter Verwendung von Bürsten, denkbar.

Mindestens eines der Kabinenelemente kann eine an seiner Innenwand angeordnete Haltevorrichtung aufweisen, welche derart ausgebildet und angeordnet ist, um eine im Reinigungsraum aufgenommene Filterplatte zu halten und insbesondere ein Verschieben und/oder Verdrehen der Filterplatte zu verhindern, während diese gereinigt wird. Die Haltevorrichtung kann beidseitig angeordnete Halteelemente aufweisen, die über einen jeweiligen Halteschlitz verfügen, wobei die Halteschlitze derart ausgebildet und angeordnet sind, dass die Filterplatte in den Halteschlitzen aufgenommen ist.

Die Reinigungseinheit kann des Weiteren über eine Trocknungsvorrichtung verfügen, mittels deren die Filterplatte getrocknet werden kann. Auf diese Weise kann die Reinigungsflüssigkeit entfernt werden. Die Trocknung kann beispielsweise erfolgen, indem ein Trocknungsgas, insbesondere Luft, auf die Filterplatte geleitet wird. Die Luft kann beispielsweise eine Temperatur im Bereich von 20 °C bis 80 °C aufweisen. In einer bevorzugten Ausführungsform kann die Sprüheinrichtung zum Abgeben des Trocknungsgases verwendet werden; damit sind einzelne Komponenten der Sprüheinrichtung, insbesondere die erwähnten Flachstrahldüsen, gleichzeitig Bestandteil der Trocknungsvorrichtung.

Die Vorrichtung kann weiterhin eine Transporteinrichtung zum Transportieren einzelner Filterplatten entlang der Längsrichtung aufweisen. Die Filterplatten müssen dann nicht manuell in eine Position verschoben werden, in der die Reinigung erfolgen kann.

Bevorzugt sind die Reinigungskabine und die Transporteinrichtung gemeinsam entlang der Längsachse bewegbar. Insbesondere können sie Bestandteil einer insgesamt entlang der Längsrichtung verschiebbaren Reinigungs- und Transporteinheit sein. Die Reinigungs- und Transporteinheit kann mindestens ein Führungselement aufweisen, das ausgebildet und angeordnet ist, um mit einer Führungsstruktur der Reinigungsvorrichtung derart zusammenzuwirken, dass die Reinigungs- und Transporteinheit entlang der Längsrichtung bewegbar ist. Die Führungsstruktur kann beispielsweise eine oder mehrere Führungsschienen aufweisen, die sich in der Längsrichtung erstrecken. Die Führungsschiene kann seitlich des Filterpakets angeordnet sein. Insbesondere kann je eine Führungsschiene an einer der beiden Seiten des Filterpakets angeordnet sein. Das Führungselement der Reinigungs- und Transporteinheit kann eine Gleitfläche oder eine Führungsrolle aufweisen, die auf der Führungsschiene gleiten bzw. rollen kann.

Die Transporteinrichtung kann über eine Greifeinheit verfügen, mittels deren eine Filterplatte an einer ersten Position bezüglich der Längsrichtung ergriffen und an einer von der ersten Position verschiedenen zweiten Position bezüglich der Längsachse positioniert werden kann. Die Transporteinrichtung, insbesondere die Greifeinheit, kann über einen Sensor verfügen, mittels dessen die Position einer Filterplatte erkennbar ist. Auf der Basis der vom Sensor durchgeführten Messung kann die Bewegung der Transporteinrichtung, insbesondere der Greifeinheit, gesteuert werden.

Um die Filterplatten einfach ergreifen zu können, können die Rahmen über insbesondere seitlich angeordnete Vorsprünge verfügen, die von der Greifeinheit ergriffen werden können. Die Vorsprünge können beispielsweise durch Bolzen gebildet sein, die sich in horizontaler Richtung in der Ebene der Filterplatten erstrecken. Die Greifeinheit kann zwei gegenüberliegende Halterungen mit jeweils einer Öffnung enthalten, in die die Vorsprünge eingreifen können. Die Halterungen können in horizontaler Richtung auf die Rahmen hin verschiebbar sein, beispielsweise mittels eines Druckzylinders.

Ein weiterer Aspekt der vorliegenden Erfindung betrifft eine Filteranlage. Diese enthält ein Filterpaket, das mehrere entlang einer Längsrichtung angeordnete Filterplatten aufweist. Ferner enthält die Filteranlage eine Reinigungsvorrichtung gemäss dem ersten Aspekt der Erfindung. Mit einer solchen Filteranlage können die oben erläuterten Vorteile erreicht werden.

In einem weiteren Aspekt betrifft die Erfindung ein Verfahren zum Reinigen von Filterplatten eines Filterpakets, das in einer Filteranlage aufgenommen ist und mehrere entlang einer Längsrichtung angeordnete Filterplatten aufweist. Das Verfahren wird unter Verwendung einer wie oben beschriebenen Reinigungsvorrichtung durchgeführt und enthält die folgenden Schritte:
a) gegebenenfalls: Bewegen der Kabinenelemente in die Offenposition;
b) Bewegen der Reinigungskabine relativ zu einer Filterplatte in der Längsrichtung;
c) Bewegen der Kabinenelemente in die Schliessposition, so dass die Kabinenelemente einen Reinigungsraum umschliessen, in dem die Filterplatte aufgenommen ist;
d) Reinigen der Filterplatte, insbesondere Besprühen der Filterplatte mit einer Reinigungsflüssigkeit;
e) Bewegen der Kabinenelemente in die Offenposition;
f) optional: Wiederholen der Schritte b) bis e) mit mindestens einer weiteren Filterplatte.

Die Formulierung "gegebenenfalls" im Schritt a) ist dahingehend zu verstehen, dass die Kabinenelemente in die Offenposition bewegt werden, falls sie sich noch nicht in der Offenposition befinden. Befinden sich die Kabinenelemente bereits in der Offenposition, so kann auf den Schritt a) verzichtet werden.

In einem weiteren Aspekt betrifft die Erfindung auch ein Verfahren zum Aufrüsten einer Filteranlage mit einem Filterpaket, das in einer Filteranlage aufgenommen ist und mehrere entlang einer Längsrichtung angeordnete Filterplatten aufweist. Das Verfahren enthält einen Schritt, in dem eine erfindungsgemässe Reinigungsvorrichtung derart installiert wird, dass eine erfindungsgemässe Filteranlage mit den erläuterten Vorteilen entsteht.

Nachfolgend werden die Erfindung und ihre Vorteile anhand von Ausführungsbeispielen näher erläutert, die in den folgenden Zeichnungen dargestellt sind. Es zeigen
- Figur 1:: eine erste erfindungsgemässe Filteranlage in einer perspektivischen Ansicht;
- Figur 2:: die Filteranlage gemäss Figur 1 in einer Seitenansicht;
- Figur 3a:: die Filteranlage gemäss Figuren 1 und 2 in einer Offenposition, in einer Schnittansicht entlang der Schnittlinie B-B in Figur 2;
- Figur 3b:: die Filteranlage gemäss Figuren 1 und 2 in einer Schliessposition, in einer Schnittansicht entlang der Schnittlinie B-B in Figur 2;
- Figur 4:: die Filteranlage gemäss Figuren 1 bis 3b in einer Schnittansicht entlang der Schnittlinie Z-Z in Figur 2;
- Figur 5:: die Filteranlage gemäss Figuren 1 bis 4 in einer Draufsicht;
- Figur 6:: die Filteranlage gemäss Figuren 1 bis 5 in einer Schnittansicht entlang der Schnittlinie X-X in Figur 5;
- Figur 7:: eine Detailansicht des Details Y in Figur 6;
- Figur 8:: eine Detailansicht des Details A in Figur 5;
- Figur 9: ein Detail eines oberen Kabinenelements;
- Figur 10:: eine zweite erfindungsgemässe Filteranlage in einer schematischen Seitenansicht;
- Figur 11:: ein Detail einer dritten erfindungsgemässen Filteranlage in einer perspektivischen Ansicht;
- Figuren 12a-i:: die erfindungsgemässe Filteranlage gemäss Figur 11 zu verschiedenen Zeitpunkten während der Durchführung eines erfindungsgemässen Verfahrens in schematischen Seitenansichten.

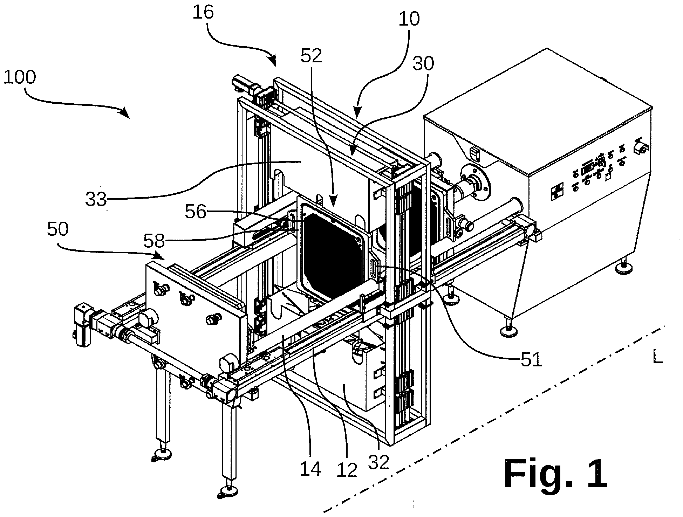

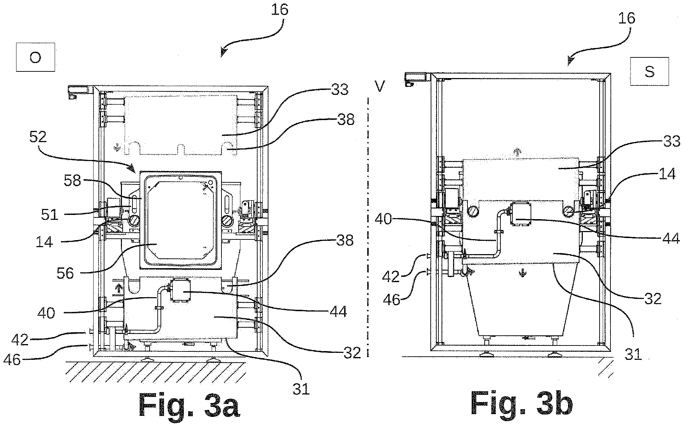

Die in Figur 1 dargestellte Filteranlage 100 enthält ein Filterpaket 50, welches mehrere entlang einer Längsrichtung L angeordnete Filterplatten 52 aufweist. Die Filterplatten 52 enthalten jeweils eine Filterstützfläche 56, die von einem Rahmen 58 gehalten ist (siehe auch Figur 3a). Beidseitig verfügen die Rahmen 58 über Tragelemente 51, mit denen die Rahmen 58 auf beidseitig angeordneten und sich in Längsrichtung L erstreckenden Tragestangen 14 aufliegen.

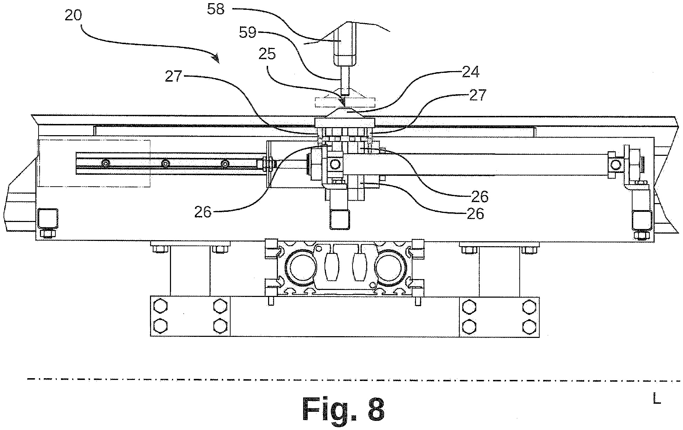

An der Filteranlage 100 ist eine Reinigungsvorrichtung 10 angeordnet, mit denen die Filterplatten 52 gereinigt werden können. Die Reinigungsvorrichtung 10 enthält eine Reinigungs- und Transporteinheit in Gestalt eines Portals 16. Das Portal 16 verfügt über eine Transporteinrichtung (siehe Figur 8) und eine Reinigungskabine 30. Das Portal 16 ist an Führungsschienen 12 entlang der Längsrichtung L bewegbar. Die Reinigungskabine 30 verfügt über zwei halbschalenartig ausgebildete Kabinenelemente, nämlich ein unteres Kabinenelement 32 und ein oberes Kabinenelement 33.

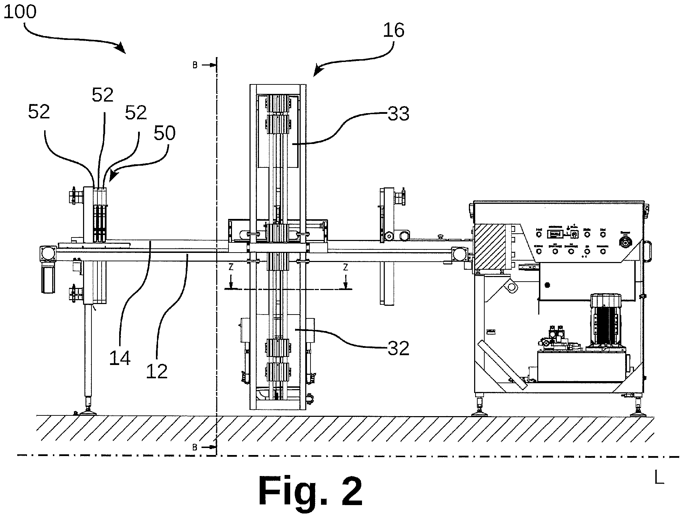

In Figur 2 ist eine Seitenansicht der Filteranlage 100 dargestellt. Wie hier zu erkennen ist, erstrecken sich die Führungsschienen 12 unterhalb Tragestangen 14.

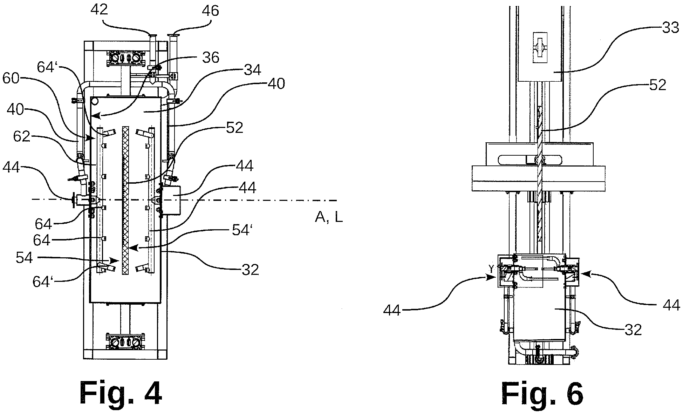

Die Figuren 3a und 3b zeigen die Kabinenelemente 32, 33 in zwei verschiedenen Positionen: In Figur 3a befindet sich das obere Kabinenelement 33 oberhalb einer Filterplatte 52 und das untere Kabinenelement 32 befindet sich unterhalb der Filterplatte 52. Durch Aufwärtsbewegen des unteren Kabinenelements 32 und Abwärtsbewegen des oberen Kabinenelements 33 entsteht eine Schliessposition S, die in Figur 3b zu sehen ist. Um dies zu ermöglichen, weisen beiden Kabinenelemente 32, 33 Aussparungen 38 auf, in welche die Tragestangen 14 in der Schliessposition S eingreifen. In der Schliessposition S ist zwischen den Kabinenelementen 32, 33 ein Reinigungsraum 34 umschlossen, in dem sich die Filterplatte 52 befindet (siehe dazu Figur 4). Eine Bodenfläche 31 des unteren Kabinenelements 32 ist geringfügig geneigt, um die vollständige Entleerung am Ende der Reinigung zu erleichtern.

An der Aussenseite des unteren Kabinenelements 32 ist eine Zuführleitung 40 für eine Reinigungsflüssigkeit, beispielsweise Wasser, montiert. Die Reinigungsflüssigkeit wird durch eine Einlassöffnung 42 zugeleitet und in einer Drehdurchführung 44 durch das untere Kabinenelement 32 in den Reinigungsraum 34 geleitet. Durch die Auslauföffnung 46 verlässt die Reinigungsflüssigkeit den Reinigungsraum 34 wieder. Alternativ zu der hier gezeigten Ausführungsform kann natürlich auch am oberen Kabinenelement 33 eine Drehdurchführung angeordnet sein.

Die Figur 4 zeigt die Innenseite des unteren Kabinenelements 32. Durch die Drehdurchführung 44 wird die Reinigungsflüssigkeit in eine als Sprüharm 62 ausgebildete Sprüheinheit eingeleitet. Der Sprüharm 62 ist um eine horizontal ausgerichtete Rotationsachse A rotierbar und verfügt über insgesamt sieben Flachstrahldüsen 64, 64', durch die die Reinigungsflüssigkeit auf die Filterplatte 52 gesprüht werden kann. Fünf erste Flachstrahldüsen 64 besprühen die Filterplatte 52 mit einem Sprühwinkel von 60°, wohingegen zwei an den Enden des Sprüharms 62 angeordnete zweite Flachstrahldüsen 64' die Filterplatte 52 mit einem Sprühwinkel von 120° besprühen. Drei der fünf ersten Flachstrahldüsen 64 sind an einer ersten Hälfte des Sprüharms 62 angeordnet und die zwei verbleibenden ersten Flachstrahldüsen 64 an einer zweiten Hälfte des Sprüharms 62. Bezüglich der Rotationsachse A weisen die fünf ersten Flachstrahldüsen 64 fünf verschiedene Radien auf.

Wie in Figur 4 weiterhin zu erkennen ist, sind auch an der gegenüberlegenden Seite eine Drehdurchführung 44 und ein Sprüharm 62 mit mehreren Flachstrahldüsen 64, 64' angeordnet. Somit können beide Seiten 54, 54' der Filterplatte 52 mit der Reinigungsflüssigkeit besprüht werden.

Die Flachstrahldüsen 64, 64' sind in einem Abstand von beispielsweise 100 mm von der Filterplatte 52 angeordnet. Das Wasser kann mit einem Druck im Bereich von 3 bar bis 5 bar und mit einem Volumenstrom im Bereich von 4 l/min bis 7 l/m pro Flachstrahldüse 64, 64' abgegeben werden.

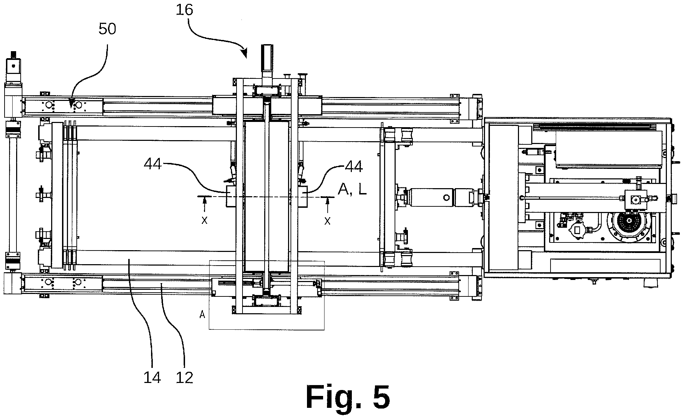

Die Figur 5 zeigt eine Draufsicht auf die Filteranlage 100. Daraus ergibt sich, dass die Führungsschienen 12 ausserhalb der Tragestangen 14 angeordnet sind.

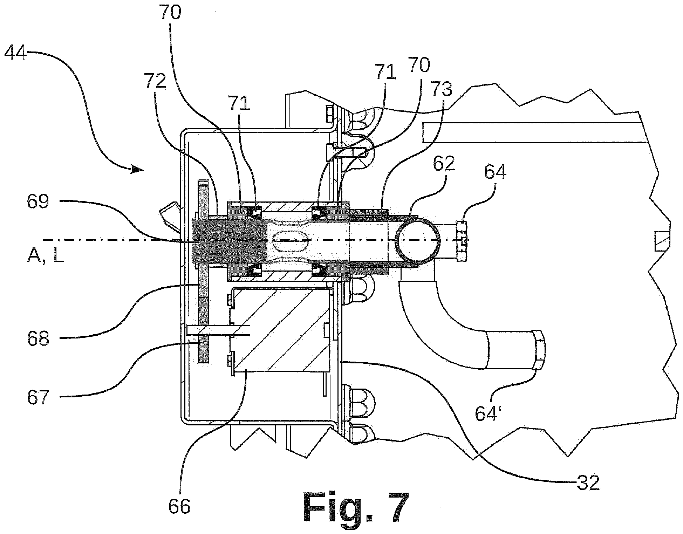

In Figur 6 ist ein Schnitt entlang der in Figur 5 eingezeichneten Schnittlinie X-X dargestellt. Das dort eingezeichnete Detail Y zeigt die Drehdurchführung 44, welche vergrössert in Figur 7 dargestellt ist. Ein Schrittmotor 66 ist über zwei Zahnräder 67, 68 mit einer Welle 69 verbunden, um diese um die Rotationsachse A anzutreiben. Die Welle 69 ist mittels einer Distanzbüchse 72, eines Gleiters 70 und zweier Wellendichtringe 71 am unteren Kabinenelement 32 gehalten. Über eine Anschweissmuffe 73 ist die Welle 69 mit dem Sprüharm 62 verbunden, um diesen anzutreiben. Im Detail erkennbar sind auch hier eine der ersten Flachstrahldüsen 64 mit einem Sprühwinkel von 60° und eine der zweiten Flachstrahldüsen 64' mit einem Sprühwinkel von 120°. Alternativ zu der hier gezeigten Ausführungsform können die Welle 69, die Distanzbüchse 72, der Gleiter 70, die Wellendichtringe 71 und die Anschweissmuffe 73 natürlich auch am oberen Kabinenelement 33 angeordnet sein.

In Figur 8 ist ein Detail der Transporteinrichtung 20 dargestellt. Sie weist eine Greifeinheit auf, die beidseitig eine konusförmige Halterung 24 enthält, die sich in Richtung der Filterplatte verjüngt und endseitig eine Öffnung 25 aufweist (wobei in Figur 8 nur eine der Halterungen 24 zu erkennen ist). Die Rahmen 58 verfügen beidseitig über je einen Bolzen 59, der in eine der Öffnungen 25 eingreifen kann. Mittels Druckzylindern 26 kann die Halterung 24 in einer zur Längsrichtung L senkrechten horizontaler Richtung auf den Rahmen 58 hin bewegt werden. Dabei werden die Druckzylinder 26 zunächst mit einem geringeren Druck beaufschlagt, sodass eine federnde Wirkung entsteht. Die Konusform der Halterung 24 bewirkt, dass diese entgegen der Federkraft vom Rahmen 58 weggedrückt wird. Mithilfe von vier Sensoren 27, von denen in Figur 8 nur zwei erkennbar sind, wird erkannt, wenn der Bolzen 59 in die Öffnung 25 eingedrungen ist. Daraufhin wird der Druck in den Druckzylindern 26 erhöht, so dass eine formschlüssige Verbindung zwischen Bolzen 59 und Greifeinheit besteht.

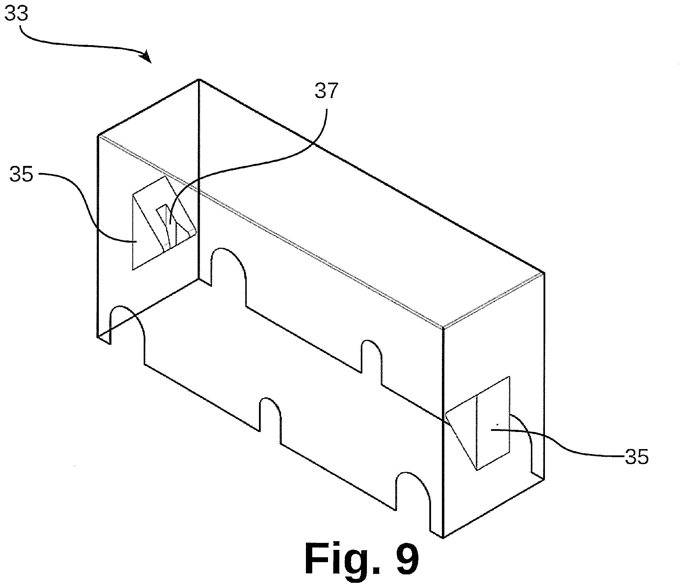

Figur 9 zeigt ein Detail des oberen Kabinenelements 33. An dessen Innenwand sind beidseitig Halteelemente 35 angeordnet, die über einen jeweiligen Halteschlitz 37 verfügen. Beim Herabsenken des oberen Kabinenelements 33 bewegt sich die hier nicht dargestellte Filterplatte 52 in die Halteschlitze 37 hinein. Auf diese Weise wird die Filterplatte 52 während der Reinigung in ihrer Position gehalten, damit sie durch den Aufprall der Reinigungsflüssigkeit nicht verschoben oder verdreht wird.

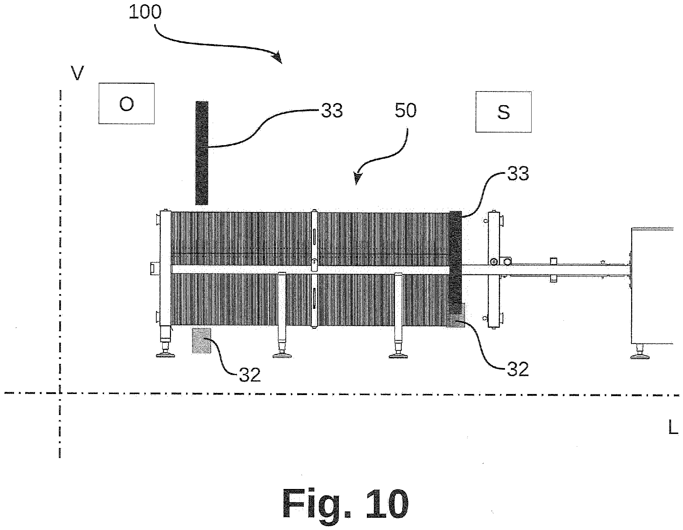

Die in Figur 10 dargestellte zweite erfindungsgemässe Filteranlage 100 enthält eine Reinigungskabine 30 mit einem unteren Kabinenelement 32 und einem oberen Kabinenelement 33, die beide in vertikaler Richtung V bewegbar sind. Im Gegensatz zum ersten Ausführungsbeispiel hat das obere Kabinenelement 33 hier eine grössere Bauhöhe als das untere Kabinenelement 32. Zur besseren Übersichtlichkeit sind die Kabinenelemente 32, 33 doppelt dargestellt, und zwar links in einer Offenstellung O und rechts in einer Schliessstellung S, obwohl auch in dieser Ausführungsform nur eine einzige Reinigungskabine erforderlich ist.

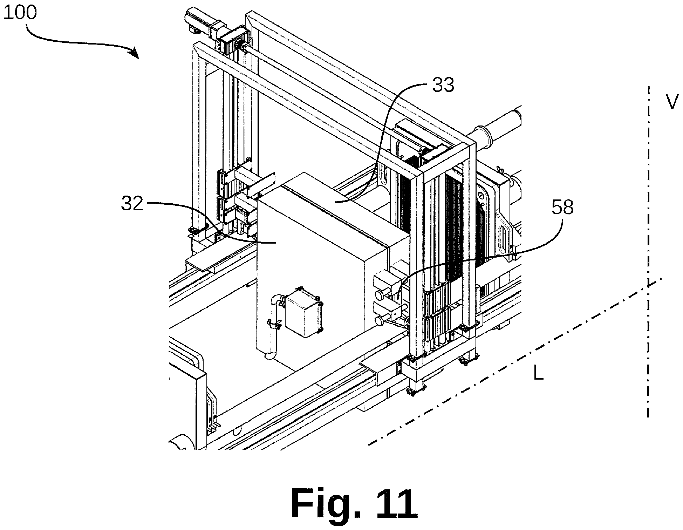

Figur 11 zeigt eine dritte erfindungsgemässe Filteranlage 100 mit zwei Kabinenelementen 32, 33, die jedoch sowohl in der Längsrichtung L als auch in der vertikalen Richtung V bewegbar sind. Im Unterschied zu den ersten beiden Ausführungsformen ist hier nicht die gesamte Filterplatte 52 im Reinigungsraum 34 aufgenommen; die Tragegriffe 51 des Rahmens 58, von denen nur einer erkennbar ist, verbleiben ausserhalb des Reinigungsraums 34.

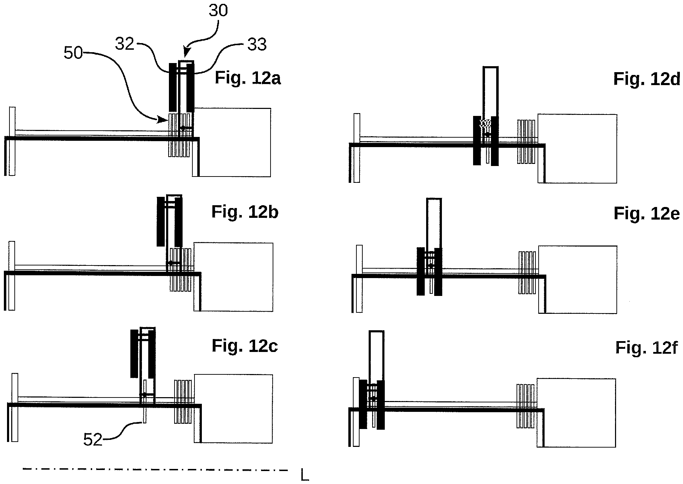

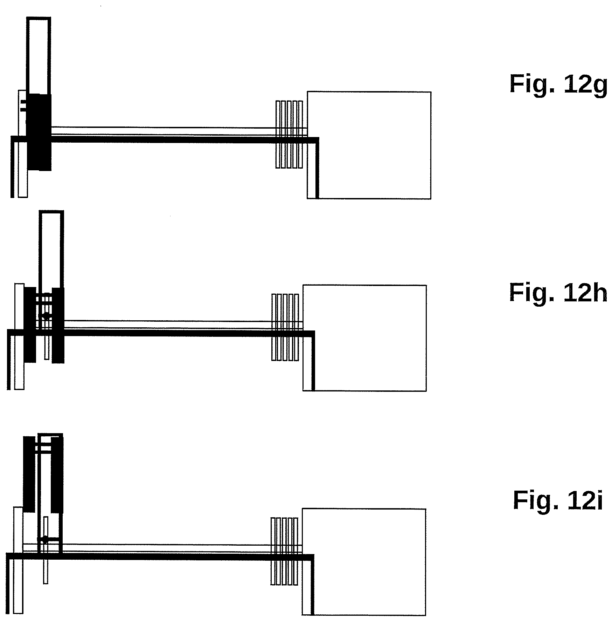

In den Figuren 12a bis 12i ist schematisch ein erfindungsgemässer Verfahrensablauf dargestellt, der mit der dritten erfindungsgemässen Filteranlage 100 durchgeführt wird. Am Anfang befinden sich die Kabinenelemente 32, 33 in einer Offenposition oder werden bei Bedarf in diese bewegt (Figur 12a). Die Reinigungskabine wird dann in der Längsrichtung L zu der am weitesten links dargestellten Filterplatte 52 bewegt (Figur 12b). Mittels der Greifeinheit wird diese ergriffen und entlang der Längsrichtung L von den weiteren Filterplatten wegbewegt (Figur 12c). Sodann werden die Kabinenelemente 32, 33 abgesenkt (Figur 12d), was durch den Abstand der ergriffenen Filterplatte von den weiteren Filterplatten ermöglicht wird. Daraufhin wird die Filterplatte 52 weiter in der Längsrichtung L von den weiteren Filterplatten wegbewegt (Figuren 12e und 12f). Anschliessend werden die beiden Kabinenelemente 32, 33 in horizontaler Richtung aufeinander zu bewegt, so dass ein umschlossener Reinigungsraum entsteht, in dem die Filterplatte 52 gereinigt wird (Figur 12g). Im folgenden Schritt werden die beiden Kabinenelemente 32, 33 in der Längsrichtung L voneinander weg (Figur 12h) und dann nach oben bewegt (Figur 12i). Anschliessend können die weiteren Filterplatten in der gleichen Art und Weise transportiert und gereinigt werden.

## Patentansprüche

1. Reinigungsvorrichtung (10) zum Reinigen von Filterplatten (52) eines Filterpakets (50), das in einer Filteranlage (100) aufgenommen ist und mehrere entlang einer Längsrichtung (L) angeordnete Filterplatten (52) aufweist, wobei die Reinigungsvorrichtung (10) enthält:
- eine Reinigungskabine (30) mit mindestens zwei Kabinenelementen (32, 33), welche derart zwischen einer Offenposition (O) und einer Schliessposition (S) relativ zueinander bewegbar sind, dass
- in der Offenposition (O) die Reinigungskabine (30) in der Längsrichtung (L) relativ zu einer Filterplatte (52) bewegbar ist und
- in der Schliessposition (S) die Kabinenelemente (32, 33) einen Reinigungsraum (34) umschliessen, in dem zumindest ein Reinigungsabschnitt der Filterplatte (52), insbesondere zumindest eine Filterstützfläche (56) der Filterplatte (52), insbesondere die gesamte Filterplatte (52) aufgenommen ist;
- bevorzugt mindestens eine Reinigungseinrichtung, insbesondere eine Sprüheinrichtung (60), mit mindestens einer im Reinigungsraum (54) angeordneten Reinigungseinheit (62), mittels deren zumindest der Reinigungsabschnitt der Filterplatte (52) in der Schliessposition (S) reinigbar, insbesondere mit einer Reinigungsflüssigkeit besprühbar, ist,
**dadurch gekennzeichnet, dass**
die Kabinenelemente (32) in einer zur Längsrichtung (L) senkrechten Richtung, insbesondere in vertikaler Richtung (V), zwischen der Offenposition (O) und der Schliessposition (S) relativ zueinander bewegbar sind.

2. Vorrichtung (10) gemäss Anspruch 1, wobei die Reinigungseinrichtung (60) mindestens zwei Reinigungseinheiten (62) aufweist, wobei eine erste Reinigungseinheit (62) zum Reinigen einer ersten Seite (54) der Filterplatte (52) angeordnet ist und eine zweite Reinigungseinheit (62') zum Reinigen einer der ersten Seite (54) gegenüberliegenden zweiten Seite (54') der Filterplatte (52) angeordnet ist.

3. Vorrichtung (10) gemäss einem der vorangehenden Ansprüche, wobei mindestens eine der Reinigungseinheiten (62) relativ zur Reinigungskabine (30) beweglich angeordnet ist.

4. Vorrichtung (10) gemäss Anspruch 3,
wobei mindestens eine der Reinigungseinheiten (62) um eine Rotationsachse (A) rotierbar angeordnet ist, die in der Längsrichtung (L) verläuft.

5. Vorrichtung (10) gemäss einem der vorangehenden Ansprüche, wobei mindestens eine der Sprüheinheiten (62) mindestens eine Flachstrahldüse (64) enthält.

6. Vorrichtung (10) gemäss Anspruch 5,
wobei die Flachstrahldüse (64) zum Besprühen der Filterplatte (52) mit einem Sprühwinkel ausgebildet ist, der im Bereich von 20° bis 140°, bevorzugt im Bereich von 45° bis 135°, weiter bevorzugt im Bereich von 60° bis 120° liegt.

7. Vorrichtung (10) gemäss einem der Ansprüche 5 und 6,
wobei die Flachstrahldüse (64) zum Besprühen der Filterplatte (52) in einer Sprühebene (E) ausgebildet und angeordnet ist, die parallel zur Längsrichtung (L) verläuft und insbesondere die Rotationsachse (A) der Sprüheinheit (62) enthält.

8. Vorrichtung (10) gemäss einem der vorangehenden Ansprüche, wobei die Reinigungseinrichtung (60), insbesondere die mindestens eine Reinigungseinheit (62), an einer Innenwand (34) eines der Kabinenelemente (32) angeordnet ist.

9. Vorrichtung (10) gemäss einem der vorangehenden Ansprüche, wobei die Vorrichtung (10) mindestens eine Transporteinrichtung (20) zum Transportieren einer Filterplatte (52) entlang der Längsrichtung (L) aufweist.

10. Vorrichtung (10) gemäss Anspruch 9,
wobei die Reinigungskabine (30) und die Transporteinrichtung (20) Bestandteil einer insgesamt entlang der Längsrichtung (L) verschiebbaren Reinigungs- und Transporteinheit (16) sind.

11. Vorrichtung (10) gemäss Anspruch 10,
wobei die Reinigungs- und Transporteinheit (16) mindestens ein Führungselement aufweist, das ausgebildet und angeordnet ist, um mit einer Führungsstruktur (12) der Reinigungsvorrichtung (10) derart zusammenzuwirken, dass die Reinigungs- und Transporteinheit (16) entlang der Längsrichtung (L) bewegbar ist.

12. Filteranlage (100), enthaltend
- ein Filterpaket (50), das mehrere entlang einer Längsrichtung (L) angeordnete Filterplatten (52) aufweist;
- eine Reinigungsvorrichtung (10) gemäss einem der vorangehenden Ansprüche zum Transportieren und Reinigen der Filterplatten (52).

13. Verfahren zum Reinigen von Filterplatten (52) eines Filterpakets (50), das in einer Filteranlage (100) aufgenommen ist und mehrere entlang einer Längsrichtung (L) angeordnete Filterplatten (52) aufweist, unter Verwendung einer Reinigungsvorrichtung (10) gemäss einem der Ansprüche 1 bis 11, enthaltend die Schritte:
a) gegebenenfalls: Bewegen der Kabinenelemente (32, 33) in die Offenposition (O);
b) Bewegen der Reinigungskabine (30) relativ zu einer Filterplatte (52) in der Längsrichtung (L);
c) Bewegen der Kabinenelemente (32, 33) in die Schliessposition (S), so dass die Kabinenelemente (32, 33) einen Reinigungsraum (34) umschliessen, in dem zumindest ein Reinigungsabschnitt der Filterplatte (52), insbesondere zumindest eine Filterstützfläche (56) der Filterplatte (52), insbesondere die gesamte Filterplatte (52) aufgenommen ist;
d) Reinigen zumindest des Reinigungsabschnitts der Filterplatte (52), insbesondere Besprühen zumindest des Reinigungsabschnitts der Filterplatte (52) mit einer Reinigungsflüssigkeit;
e) Bewegen der Kabinenelemente (32, 33) in die Offenposition (O) ;
f) optional: Wiederholen der Schritte b) bis e) mit mindestens einer weiteren Filterplatte (52).

14. Verfahren zum Aufrüsten einer Filteranlage (100) mit einem Filterpaket (50), das in einer Filteranlage (100) aufgenommen ist und mehrere entlang einer Längsrichtung (L) angeordnete Filterplatten (52) aufweist,
enthaltend einen Schritt, in dem
eine Reinigungsvorrichtung (10) gemäss einem der Ansprüche 1 bis 11 derart installiert wird, dass eine Filteranlage (100) gemäss Anspruch 12 entsteht.

## Claims

1. A cleaning device (10) for cleaning filter plates (52) of a filter pack (50) accommodated in a filter system (100) and having a plurality of filter plates (52) arranged along a longitudinal direction (L), the cleaning device (10) comprising:
- a cleaning cabin (30) with at least two cabin elements (32, 33) which are movable relative to each other between an open position (O) and a closed position (S) in such a way that
- in the open position (O), the cleaning cabin (30) is movable in the longitudinal direction (L) relative to a filter plate (52), and
- in the closed position (S), the cabin elements (32, 33) enclose a cleaning space (34) in which at least one cleaning section of the filter plate (52), in particular at least one filter support surface (56) of the filter plate (52), in particular the entire filter plate (52) is accommodated;
- preferably at least one cleaning assembly, in particular a spray device (60), having at least one cleaning unit (62) which is arranged in the cleaning space (54) and by means of which at least the cleaning section of the filter plate (52) can be cleaned in the closed position (S), in particular sprayed with a cleaning liquid,
**characterized in that**
the cabin elements (32) are movable relative to one another in a direction perpendicular to the longitudinal direction (L), in particular in the vertical direction (V), between the open position (O) and the closed position (S).

2. Device (10) according to claim 1,
wherein the cleaning assembly (60) comprises at least two cleaning units (62), wherein a first cleaning unit (62) is arranged for cleaning a first side (54) of the filter plate (52) and a second cleaning unit (62') is arranged for cleaning a second side (54') of the filter plate (52) opposite to the first side (54).

3. Device (10) according to any one of the preceding claims, wherein at least one of the cleaning units (62) is movably arranged relative to the cleaning cabin (30).

4. Device (10) according to claim 3,
wherein at least one of the cleaning units (62) is rotatably arranged about an axis of rotation (A) extending in the longitudinal direction (L).

5. Device (10) according to any one of the preceding claims, wherein at least one of the spray units (62) includes at least one flat spray nozzle (64).

6. The device (10) according to claim 5,
wherein the flat spray nozzle (64) is configured to spray the filter plate (52) at a spray angle that is in the range of 20° to 140°, preferably in the range of 45° to 135°, more preferably in the range of 60° to 120°.

7. Device (10) according to any one of claims 5 and 6,
wherein the flat spray nozzle (64) for spraying the filter plate (52) is formed and arranged in a spraying plane (E) that is parallel to the longitudinal direction (L) and, in particular, includes the axis of rotation (A) of the spraying unit (62).

8. Device (10) according to any one of the preceding claims, wherein the cleaning assembly (60), in particular the at least one cleaning unit (62), is arranged on an inner wall (34) of one of the cabin elements (32).

9. Device (10) according to any one of the preceding claims, wherein the device (10) comprises at least one transport means (20) for transporting a filter plate (52) along the longitudinal direction (L).

10. Device (10) according to claim 9,
wherein the cleaning cabin (30) and the transport device (20) are part of a cleaning and transport unit (16) displaceable as a whole along the longitudinal direction (L).

11. Device (10) according to claim 10,
wherein the cleaning and transport unit (16) comprises at least one guide element formed and arranged to cooperate with a guide structure (12) of the cleaning device (10) such that the cleaning and transport unit (16) is movable along the longitudinal direction (L).

12. Filter unit (100), containing
- a filter pack (50) comprising a plurality of filter plates (52) arranged along a longitudinal direction (L);
- a cleaning device (10) according to any one of the preceding claims for transporting and cleaning the filter plates (52) .

13. A process for cleaning filter plates (52) of a filter pack (50) accommodated in a filter system (100) and having a plurality of filter plates (52) arranged along a longitudinal direction (L), using a cleaning device (10) according to any one of claims 1 to 11, comprising the steps of:
a) if necessary: moving the cabin elements (32, 33) to the open position (O);
b) moving the cleaning cabin (30) relative to a filter plate (52) in the longitudinal direction (L);
c) moving the cabin elements (32, 33) into the closed position (S) so that the cabin elements (32, 33) enclose a cleaning space (34) in which at least one cleaning section of the filter plate (52), in particular at least one filter support surface (56) of the filter plate (52), in particular the entire filter plate (52) is received;
d) cleaning at least the cleaning section of the filter plate (52), in particular spraying at least the cleaning section of the filter plate (52) with a cleaning liquid;
e) moving the cabin elements (32, 33) to the open position (O) ;
f) optionally: repeating steps b) to e) with at least one further filter plate (52).

14. A process for upgrading a filter system (100) having a filter pack (50) accommodated in a filter system (100) and having a plurality of filter plates (52) arranged along a longitudinal direction (L),
comprising a step of
installing a cleaning device (10) according to any one of claims 1 to 11 such that a filter system (100) according to claim 12 is formed.

## Revendications

1. Dispositif de nettoyage (10) pour nettoyer des plaques de filtre (52) d'un paquet de filtre (50) qui est reçu dans une installation de filtration (100) et qui comprend une pluralité de plaques de filtre (52) disposées le long d'une direction longitudinale (L), le dispositif de nettoyage (10) comprenant :
- une cabine de nettoyage (30) avec au moins deux éléments de cabine (32, 33), qui sont mobiles l'un par rapport à l'autre entre une position ouverte (O) et une position fermée (S) de telle sorte que
- dans la position ouverte (O), la cabine de nettoyage (30) est mobile dans la direction longitudinale (L) par rapport à une plaque de filtre (52), et
- dans la position fermée (S), les éléments de cabine (32, 33) entourent un espace de nettoyage (34) dans lequel est logée au moins une section de nettoyage de la plaque de filtre (52), en particulier au moins une surface de support de filtre (56) de la plaque de filtre (52), en particulier la plaque de filtre (52) entière ;
- de préférence au moins un assemblage de nettoyage, en particulier un assemblage de pulvérisation (60), avec au moins une unité de nettoyage (62) disposée dans l'espace de nettoyage (54), au moyen de laquelle au moins la section de nettoyage de la plaque de filtre (52) peut être nettoyée dans la position fermée (S), en particulier être pulvérisée avec un liquide de nettoyage,
**caractérisé en ce que**
les éléments de cabine (32) sont mobiles les uns par rapport aux autres dans une direction perpendiculaire à la direction longitudinale (L), en particulier dans la direction verticale (V), entre la position ouverte (O) et la position fermée (S).

2. Dispositif (10) selon la revendication 1,
dans lequel l'assemblage de nettoyage (60) présente au moins deux unités de nettoyage (62), une première unité de nettoyage (62) étant disposée pour nettoyer un premier côté (54) de la plaque de filtre (52) et une deuxième unité de nettoyage (62') étant disposée pour nettoyer un deuxième côté (54') de la plaque de filtre (52), opposé au premier côté (54) .

3. Dispositif (10) selon l'une quelconque des revendications précédentes,
dans lequel au moins l'une des unités de nettoyage (62) est agencée de manière mobile par rapport à la cabine de nettoyage (30).

4. Dispositif (10) selon la revendication 3,
dans lequel au moins une des unités de nettoyage (62) est disposée de manière à pouvoir tourner autour d'un axe de rotation (A) qui s'étend dans la direction longitudinale (L).

5. Dispositif (10) selon l'une des revendications précédentes, dans lequel l'assemblage de nettoyage est conçu comme un dispositif de pulvérisation (60) qui contient au moins une unité de pulvérisation (62) avec au moins une buse à jet plat (64).

6. Dispositif (10) selon la revendication 5,
dans lequel la buse à jet plat (64) est conçue pour pulvériser la plaque de filtre (52) avec un angle de pulvérisation qui se situe dans la plage de 20° à 140°, de préférence dans la plage de 45° à 135°, plus préférablement dans la plage de 60° à 120°.

7. Dispositif (10) selon l'une des revendications 5 et 6,
dans lequel la buse à jet plat (64) destinée à pulvériser la plaque de filtre (52) est configurée et disposée dans un plan de pulvérisation (E) qui est parallèle à la direction longitudinale (L) et qui contient notamment l'axe de rotation (A) de l'unité de pulvérisation (62).

8. Dispositif (10) selon l'une des revendications précédentes, dans lequel l'assemblage de nettoyage (60), en particulier l'au moins une unité de nettoyage (62), est disposé sur une paroi intérieure (34) de l'un des éléments de cabine (32).

9. Dispositif (10) selon l'une des revendications précédentes, dans lequel le dispositif (10) comprend au moins un dispositif de transport (20) pour transporter une plaque de filtre (52) le long de la direction longitudinale (L).

10. Dispositif (10) selon la revendication 9,
dans lequel la cabine de nettoyage (30) et le dispositif de transport (20) font partie d'une unité de nettoyage et de transport (16) déplaçable ensemble le long de la direction longitudinale (L).

11. Dispositif (10) selon la revendication 10,
dans lequel l'unité de nettoyage et de transport (16) comprend au moins un élément de guidage qui est conçu et agencé pour coopérer avec une structure de guidage (12) du dispositif de nettoyage (10) de telle sorte que l'unité de nettoyage et de transport (16) est mobile le long de la direction longitudinale (L).

12. Installation de filtration (100), comprenant
- un paquet de filtres (50) qui présente plusieurs plaques de filtre (52) disposées le long d'une direction longitudinale (L) ;
- un dispositif de nettoyage (10) selon l'une des revendications précédentes pour le transport et le nettoyage des plaques de filtre (52).

13. Procédé de nettoyage de plaques de filtre (52) d'un paquet de filtres (50) qui est logé dans une installation de filtration (100) et qui présente plusieurs plaques de filtre (52) disposées le long d'une direction longitudinale (L), en utilisant un dispositif de nettoyage (10) selon l'une des revendications 1 à 11, comprenant les étapes suivantes :
a) le cas échéant : déplacer des éléments de la cabine (32, 33) vers la position ouverte (O) ;
b) déplacer la cabine de nettoyage (30) par rapport à une plaque de filtre (52) dans la direction longitudinale (L) ;
c) déplacer les éléments de cabine (32, 33) dans la position fermée (S), de sorte que les éléments de cabine (32, 33) entourent un espace de nettoyage (34) dans lequel est logée au moins une section de nettoyage de la plaque de filtre (52), en particulier au moins une surface de support de filtre (56) de la plaque de filtre (52), en particulier la plaque de filtre (52) entière ;
d) nettoyer au moins la section de nettoyage de la plaque de filtre (52), en particulier pulvériser un liquide de nettoyage sur au moins la section de nettoyage de la plaque de filtre (52) ;
e) déplacer les éléments de la cabine (32, 33) vers la position ouverte (O) ;
f) facultativement, répéter les étapes b) à e) avec au moins une autre plaque de filtre (52).

14. Procédé d'augmenter une installation de filtration (100) avec un paquet de filtre (50) qui est logé dans une installation de filtration (100) et qui présente plusieurs plaques de filtre (52) disposées le long d'une direction longitudinale (L),
comprenant une étape dans laquelle
un dispositif de nettoyage (10) selon l'une des revendications 1 à 11 est installé de manière à obtenir une installation de filtration (100) selon la revendication 12.
